## Europäisches Patentamt
## European Patent Office
## Office européen des brevets

(19)

(11) Publication number: **0 067 033**
A1

(12) **EUROPEAN PATENT APPLICATION**

(21) Application number: **82302837.8**

(51) Int. Cl.³: **G 05 D 23/19,** G 01 K 15/00

(22) Date of filing: **02.06.82**

(30) Priority: **02.06.81 JP 81414/81**
**05.10.81 JP 158463/81**

(43) Date of publication of application: **15.12.82**
**Bulletin 82/50**

(84) Designated Contracting States: **CH DE FR GB LI**

(71) Applicant: **HOXAN CORPORATION, 2, 1-chome, Nishi Kita-Sanjyo, Chuo-ku Sapporo-shi Hokkaido (JP)**

(72) Inventor: **Kuraoka, Yasuo c/o Hoxan-Laboratory of Hoxan Corp., 3-17, 2-chome, Gojyo Kikusui Shiroishi-ku, Sapporo-shi Hokkaido (JP)**

(74) Representative: **Crawford, Andrew Birkby et al, A.A. THORNTON & CO. Northumberland House 303-306 High Holborn, London WC1V 7LE (GB)**

(54) **A temperature control system for use with temperature responsive device calibration arrangement or the like.**

(57) A computer controlled feed-back control system enables the temperature of a suitable coolant to be maintained exactly a desired temperature or series of temperatures, for storing precious organic tissues or the like, or for calibrating cryogenic measuring instruments.

0067033

## A TEMPERATURE CONTROL SYSTEM FOR USE WITH TEMPERATURE RESPONSIVE DEVICE CALIBRATION ARRANGEMENT OR THE LIKE

The present invention relates generally to an arrangement for precisely controlling temperatures and more more specifically to an arrangement for controlling very low and/or cryogenic temperatures.

In prior art arrangements it has been difficult and time consuming to calibrate resistance thermometers for cryogenic engineering use. Usually this type of calibration has been carried unit by unit and at usually at only one temperature. This of course does not lend itself to mass production of precision instruments such as cryogenic resistance thermometers which find notably application in so called "super conductor" engineering.

The present invention features the use of a computer controlled feed-back temperature control system which enables the temperature of a suitable coolant to be maintained at exactly a desired temperature for storing precious organic tissues or the like. The arrangement further allows for a series of temperatures to be stagewisely attained and maintained for a period sufficiently long for the calibration of a number of cryogenic resistance thermometers (for example).

The features and advantages of the arrangement of the present invention will become more clearly appreciated from the following description taken in conjunction with the accompanying drawings in which:

Fig. 1 is a block diagram of a first embodiment of the present invention;

Fig. 2 is a block diagram showing a second embodiment of the present invention; and

Fig. 3 is a schematic sectional view of cell utilized in the arrangements shown in Figs. 1 and 2.

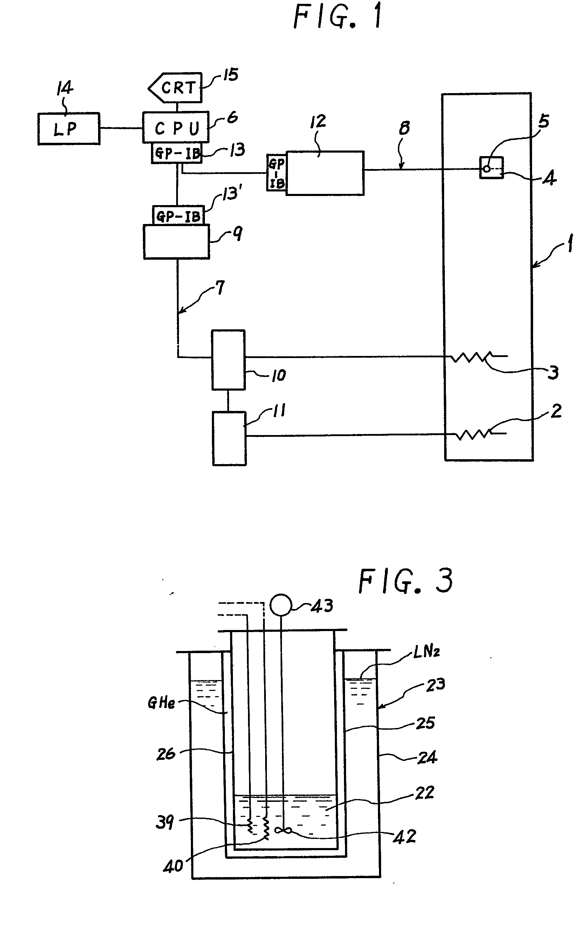

Turning now to the drawings and more specifically to Fig. 1, a first embodiment of the present invention is shown. In this arrangement a cell indicated in the drawing by the numeral 1, has a temperature sensing element 2 and a heating element 3 immersed in a suitable coolant such as freon or alcohol. Indicated in this drawing by the numeral 5 is a thermocouple and located thereabout or immediately adjacent thereto is a sample container 4 in which precious organic tissue or the like is stored.

A computer 6 which includes a CPU, a RAM and a ROM is operatively connected to an analog temperature regulator unit 10 via a voltage generator 9. Operatively connected to the analog temperature regulator 10 is a thyrister 11 which as shown, receives an input from the temperature sensing element 2. Interposed between the computer 6 and the thermocouple 5 is a digital voltmeter 12 which like the voltage generator 9 is connected to the computer through a GP-IB type interface (13, 13'). The computer is provided with a CRT (cathode ray tube) 15 and a line printer 14.

Fig. 3 shows an example of a cell which may be utilized in the arrangement shown in Fig. 1. In this figure the cell is denoted by the numeral 23. As shown the cell consist of an outer container 24 containing liquid nitrogen (or other suitable cryogenic fluid). Immersed in this is a vessel having dual walls 25, 26 which contains a suitable coolant such as freon or alcohol and which is partially insulated from the cryogenic fluid by a helium gas layer defined between the walls 25 and 26. A suitable mixer 42 driven by a motor 43 is provided to mix the coolant and maintain an essentially uniform temperature throughout the coolant.

In operation, the computer is adapted to issue an intial command to the voltage generator which in turns produces a voltage (for example 3 volt) adequate to induce the heater to raise the temperature of the fluid to a predetermined level, for example -100 degrees C. However, the precision of the feedback control provided by the temperature sensing element and the thyrister is only adequate to maintain the temperature within $\pm$ 0.6

degrees of the target value. Thus, in order to acheive exactly the desired temperature the computer calculates the voltage increase or decrease necessary on the basis of the input from the digital voltmeter 12, which of course is constantly responding to the output of the termocouple 5. Thus, the voltage generator may be subsequently commanded to increase the voltage level from 3.0 volt to 3.012 volt by way of example only.

In this embodiment it is preferred that the computer take the form of a microcomputer for the sake of economy. Now, as well known such microcomputers are not able to carry out "time sharing" as compared with larger more sophisicated units, accordingly, a kind of ON-OFF operation occurs between determining the actual temperature of the coolant via the thermocouple and the digital voltmeter, the subsequent calculation and the correction of the voltage being generated by the voltage generator. However, the computer is able perform this operation with sufficient speed to accurately maintain the tempeature of the coolant in the cell at exactly the desired level.

This of course enables the safe storage of highly sensitive tissues or the like without the fear of deterioration due to excessive/insufficient cooling thereof.

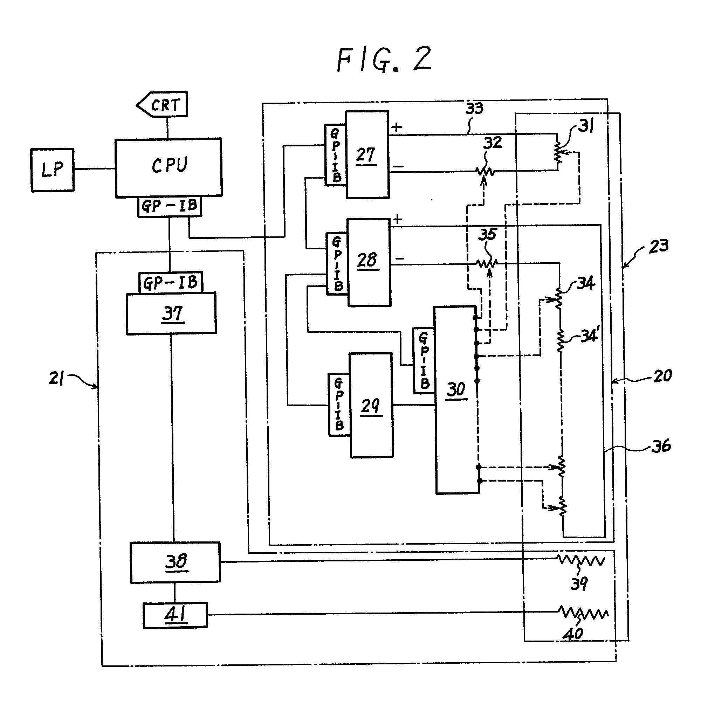

Fig. 2 shows a second embodiment of the present invention. This arrangement is similar to that shown in Fig. 1 but wherein a plurality of resistance thermometers 34, 34', etc are immersed in a coolant contained in a cell indicated in this figure by the numeral 23. In this embodiment, the thermocouple 5 is replace with a standardized resistance thermometer element 31. This element 31 is connected by a line 33 to a current generator 27. For the purpose of correcting for any variations in the output of the current generator 27 a standard resistance 32 is connected in series with the standardized resistance thermometer element 31 (which may be made of platinum). The current generator 27 in this instance is set to output 1 mA. A second current generator 28 is connected in series with the afore mentioned resistance theremometer elements 34, 34' etc. This second current generator is adapted to output 5 mA. Provided in this series circuit is a second standard resistance 35. A scanner 30 is operatively connected to each of the elements 31, 32, 35, 34, 34' etc., for sensing the terminal voltage thereof. A digital voltmeter 29 is connected to the scanner 30 as shown. Each of the current generators 27, 28 the scanner 30 and the digital voltmeter 29 are integrated with the computer through GP-IB interfaces.

As previously mentioned, the standard resistance 32 is provided in series with the standardized resistance thermometer element 31 for the purpose of eliminating the error which is apt to occur due to the inability of commercially available current generators to hold the current perfectly stable. Likewise the standard resistance 35 is provided in connection with the current generator 28. However, yet another source of error is encountered in that the metal used in the actual contacts via which the terminal voltages of the resistance thermometer elements to the calibrated are sensed, and the metal of the actual elements 34, 34' etc. tends to create a thermocouple effect and induce an EMF. To eliminate this error it is highly preferred in this embodiment to during the calibration operation to take a first reading (via the scanner), reverse the polarity of the current flow generated by the current generator 28 and take a second reading. It is further preferred that the computer be programmed to take the two readings and average same.

In operation the temperature of the coolant is raised to -10 degrees C for example, stablized at exactly that temperature via a feed back control type operation previously disclosed in connection with the first embodiment, and two terminal voltage readings taken as previously described. The data so derived is fed to the computer and duly processed therein. Next the temperature is lowered to exactly -20 degrees C and the calibration proceedure repeated. Subseqently, the temperture is dropped by 10 degree increments to -180 degrees C (for example) and each time highly accurate calibration data derived and stored.

Consequently, it is possible to very accurately and quickly calibrate a large number of such type thermometers.

## CLAIMS

1.    A system comprising:

a cell containing a coolant, said cell being immersed in a cryogenic temperature media to be cooled thereby;

heating means for heating said coolant;

standard resistance thermometer means for sensing the temperature of said coolant;

a computer including a CPU, a RAM and a ROM, said computer being connected with said standard thermometer means for receiving an input indicative of the actual temperature of said coolant, and with said heating means for controlling said heating means in a manner to control the amount of heat produced thereby so as to obtain a desired predetermined temperature; and

sample means immersed in said coolant.

2.    A system as claimed in claim 1, wherein said sample means takes the form of organic matter.

3.    A system as claimed in claim 1, wherein said sample means takes the form of a temperature responsive device.

4.    A system as claimed in claim 1, wherein said sample means takes the form of a plurality of resistance thermometers.

5.    A system as claimed in claim 4, further comprising circuit means associated with said standard resistance thermometer means and said plurality of resistance thermometers for sensing the output voltages of each of the plurality of resistance thermometers and comparing same with the output of said standard resistance thermometer means, said circuit means being connected with said computer.

6.    A system as claimed in claim 5 wherein said circuit means includes:

a first current generator connected in series with said standard resistance thermometer means through a first standard resistance;

a second current generator connected in series with said plurality of resistance thermometers through a second standard resistance;

scanner means operatively connected with each of said standard resistance means, said first and second standard resistances, and said plurality of resistance thermometers for sensing the terminal voltage of each;

a digital voltmeter operatively connected to said scanner;

said first current generator, said second current generator, said scanner means and said digital voltmeter being integrated with said computer through a GP-IB interface system.

## FIG. 1

## FIG. 3

# FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | ELECTRONIQUE INDUSTRIELLE, no. 9, 1st February 1981, pages 69-72, Paris (FR); J.R.VELLAS et al.: "Ensemble d'acquisition et de traitement des paramètres électriques avec bus IEEE-488". *The whole document* | 1,3 | G 05 D   23/19 G 01 K   15/00 |
| Y | ELECTRONIQUE INDUSTRIELLE | 4,5,6 | |
| Y | ADVANCES IN INSTRUMENTATION, vol. 31, no. 2, February 1976, pages 611/1-611/15; D.L.SWARTZ et al.: "Calibration of cryogenic temperature sensing elements". *Page 611/3, column 2, lines 18-49; figure 3; page 611/4, column 1, lines 12-16; figure 3; page 611/4, column 2, lines 1-10; page 611/7, column 1, line 34 - column 2, line 40* | 4,5,6 | |

TECHNICAL FIELDS SEARCHED (Int. Cl. 3)

G 05 B
G 05 D
G 01 K

The present search report has been drawn up for all claims

| Place of search | Date of completion of the search | Examiner |
|---|---|---|
| THE HAGUE | 06-09-1982 | HOUILLON J.C.P.L. |